# EUROPÄISCHE PATENTSCHRIFT

(11) **EP 1 534 419 B1**
(45) Veröffentlichungstag und Bekanntmachung des Hinweises auf die Patenterteilung: **12.11.2008**
(21) Anmeldenummer: 03793688.7
(22) Anmeldetag: 05.08.2003
(51) Int. Cl.: B01J 8/24

(54) **TREIBDÜSEN-INJEKTIONS-VERFAHREN IN WIRBELSCHICHTREAKTOREN**
PROPULSIVE NOZZLE INJECTION METHOD IN FLUIDISED BED REACTORS
PROCEDE D'INJECTION A BUSES DE PROPULSION DANS DES REACTEURS A LIT FLUIDISE

(30) Priorität: 13.08.2002 DE 10237124
(43) Veröffentlichungstag der Anmeldung: 01.06.2005
(73) Patentinhaber: Linde Aktiengesellschaft, 80807 München (DE)
(72) Erfinder: REICHSTEIN, Volkmar, 46147 Oberhausen (DE); KADELKA, Heinz, 47589 Uedem (DE)
(74) Vertreter: Zahn, Christoph
(86) Internationale Anmeldenummer: PCT/EP2003/008657
(87) Internationale Veröffentlichungsnummer: WO 2004/022219

(56) Entgegenhaltungen:
- EP-A- 0 318 185
- WO-A-01/26796
- WO-A-98/53908
- DE-A- 19 722 570
- US-A- 4 017 253
- US-A- 4 374 663

## Beschreibung

Die Erfindung betrifft ein Verfahren zur Durchführung von Reaktionen in einer fluidisierten Partikelschicht, wobei Luft in die Partikelschicht eingebracht wird.

In Wirbelschichtreaktoren werden Feststoffpartikel auf einen Rost aufgebracht und von unten mit einem Gasstrom durchströmt. Die Partikel werden dadurch aufgelockert beziehungsweise aufgewirbelt und es bildet sich eine fluidisierte Partikelschicht aus. Je nach Gasgeschwindigkeit und dem Grad der Aufwirbelung bezeichnet man diese auch als Fließbett, Wirbelschicht oder zirkulierende Wirbelschicht.

Bei der Durchführung von Reaktionen in fluidisierten Partikelschichten treten Probleme auf, wenn das durchströmende Gas nicht gleichmäßig über den gesamten Querschnitt des Reaktors verteilt ist. In der WO 98/53908 wird daher vorgeschlagen, ein oder mehrere Reaktanten mit Überschallgeschwindigkeit transversal in die fluidisierte Partikelschicht einzublasen. Hierdurch soll die radiale Verteilung der Reaktanten verbessert werden. Mit diesem Verfahren lässt sich der Reaktionsablauf jedoch nur in engen Grenzen steuern.

Aus der WO 01/26796 A1 ist ein Verfahren zur Durchführung einer Reaktion zwischen gasförmigen und festen Reaktanten in einer fluidisierten Partikelschicht bekannt, wobei ein Feststoffpulver mit einem Treibgasstrom in die Partikelschicht eingeblasen wird.

Aufgabe vorliegender Erfindung ist es daher, ein Verfahren zur Durchführung von Reaktionen in einer fluidisierte Partikelschicht zu entwickeln, bei dem sich in der Partikelschicht ein verbesserter Strömungsverlauf ausbildet und welches verschiedene Reaktorfahrweisen erlaubt.

Diese Aufgabe wird durch ein Verfahren der eingangs genannten Art gelöst, wobei die in die Partikelschicht einzubringende Luft mittels gasförmigem Sauerstoff nach dem Strahlpumpenprinzip angesaugt, mit dem Sauerstoff gemischt und in die Partikelschicht eingebracht wird.

Erfindungsgemäß wird mindestens die in den Wirbelschichtreaktor einzubringende Luft in einer Treibdüse angesaugt, mit dem Treibmedium gemischt und dann mit hoher Geschwindigkeit in die fluidisierte Partikelschicht injiziert. Durch die erfindungsgemäße Injektion werden die Strömungsbedingungen, die Konvektion und damit der Wärmeübergang in der fluidisierten Partikelschicht verbessert und eine gleichmäßigere Verteilung der Reaktanten in der Schicht erreicht. Auf diese Weise wird die Umsetzung der Reaktanten verbessert und die Ausbeute erhöht. Ferner können Energiekostenreduzierungen und höhere Ofenwirkungsgrade erzielt werden.

Die Erfindung hat sich insbesondere bei der Verwendung eines sauerstoffhaltigen Gases, insbesondere Luft oder Sauerstoff, als Treibmedium bewährt. Durch den Einsatz fast jeder beliebigen Sauerstoffkonzentration im Treibdüsenstrom können jeweils dem Reaktor angepasste Verhältnisse eingestellt werden und die thermischen und mechanischen Bedingungen in den Reaktoren gezielt beeinflusst werden. In der Regel wird eine Sauerstoffkonzentration von 25 bis 60 %, bevorzugt von 30 bis 45% im Treibdüsenstrom vorgesehen.

Das erfindungsgemäße Verfahren kann auch genutzt werden, um mittels eines inerten Gases als Treibmedium zusätzliche Reaktanten in die fluidisierte Partikelschicht einzubringen.

Die Erfindung eignet sich auch, um Stoffe in die fluidisierte Partikelschicht einzutragen, die die gewünschten Reaktionen durch Temperaturerhöhung fördern, beispielsweise zusätzlichen Brennstoff. Es können auch Stoffe eingeschleust werden, die bei den in dem Wirbelschichtreaktor ablaufenden Reaktionen schadlos entsorgt werden können, wie zum Beispiel Abfallsäuren.

Zur Anpassung an die Temperaturverhältnisse im Reaktor kann die Einspeisung in die fluidisierte Partikelschicht auch mit einer Kühlung, insbesondere einer Wasserkühlung, versehen sein.

Bei konventionellen Wirbelschichtreaktoren wird häufig Luft über Winddüsen in die fluidisierte Partikelschicht eingeblasen. Erfindungsgemäß ist es von Vorteil, wenn ein Teilstrom von dieser Luft abgezweigt und der Treibdüse zugeführt wird. Anstelle der Verwendung des Teilstromes ist es auch möglich, direkt aus der Umgebungsluft Luft in die Treibdüse anzusaugen.

Vorzugsweise wird der Treibdüsenstrom, d.h. das aus der Treibdüse austretende Gemisch, in im wesentlichen transversaler Richtung in die fluidisierte Partikelschicht eingebracht. Die Neigung des Treibdüsenstroms zur Horizontalen wird an die Gegebenheiten des Reaktors und die gewünschten Reaktionsabläufe angepasst. In der Regel wird dabei ein Winkel zwischen 0° und 20° zur Horizontalen eingestellt.

Die Mengenverhältnisse von dem in den Wirbelschichtreaktor einzubringenden Medium zu dem Treibmedium sind in weiten Grenzen wählbar. Bevorzugt werden Verhältnisse zwischen 0,1 und 10 eingestellt.

Eine besonders gute Umsetzung der Reaktanten in der fluidisierten Partikelschicht wird erreicht, wenn an mehreren Stellen ein Treibdüsenstrom in die Wirbelschicht eingedüst wird. Hierbei hat es sich bewährt, vier bis zehn, möglichst gleichmäßig über den Umfang der Partikelschicht verteilte Treibdüsen vorzusehen. Die einzelnen Treibdüsen können sowohl alle gleichzeitig als auch zu verschiedenen Zeiten betrieben werden. Je nach Prozessführung hat es sich auch als günstig erwiesen, den oder die Treibdüsenströme gepulst in die Partikelschicht zu injizieren. Es ist durchaus auch vorteilhaft, mehrere verschiedene Medien an unterschiedlichen Stellen in die Partikelschicht erfindungsgemäß einzubringen.

Das erfindungsgemäße Verfahren wird mit Vorteil in Wirbelschichtreaktoren bei der Verbrennung von Klärschlamm, dem Rösten von Metallen, zur Säuregewinnung, der Kohlevergasung, bei Chlorierungsprozessen, bei Katalysatorprozessen oder bei Crackprozessen eingesetzt.

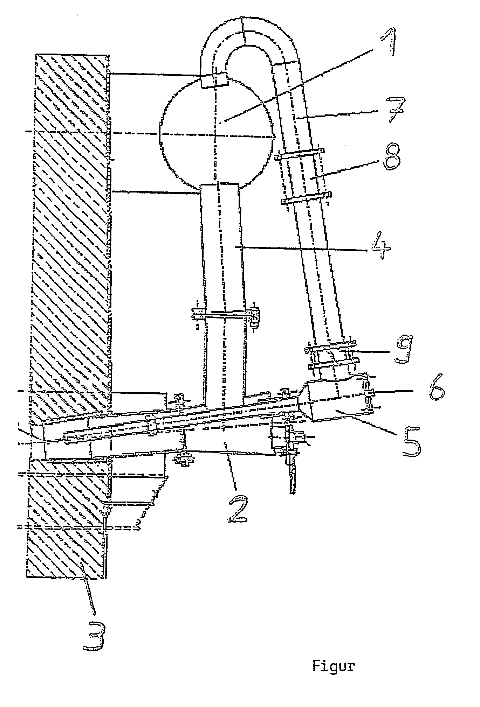

Die Erfindung sowie weitere Einzelheiten der Erfindung werden im Folgenden anhand von dem in der Zeichnung dargestellten Ausführungsbeispiel näher erläutert. Hierbei zeigt die
- Figur: schematisch das Funktionsprinzip des erfindungsgemäßen Verfahrens.

Die Treibdüsen-Injektions-Vorrichtung besitzt eine ringförmig um den Wirbelschichtreaktor verlaufende Windleitung 1, an die eine in der Zeichnung nicht dargestellte Zuleitung für Luft angeschlossen ist. Um den Umfang des Wirbelschichttreaktors sind acht Winddüsen 2 jeweils in die Wand 3 des Reaktors eingesetzt. Die Winddüsen 2 sind jeweils über eine Zuführung 4 mit der ringförmigen Windleitung 1 verbunden.

Der Neigungswinkel der Winddüsen 2 wird den jeweiligen geometrischen Verhältnissen im Inneren des Wirbelschichtreaktors angepasst. Im Regelfall wird eine Neigung zwischen 3° und 9° vorgesehen.

In die Winddüsen 2 wird eine Treibdüse 5 montiert, die mit einer Sauerstoffzuführung 6 versehen ist. Von der Windleitung 1 zweigen zusätzlich Saugleitungen 7 zu den Treibdüsen 5 ab. In den Saugleitungen 7 sind ferner ein Durchflussmesser 8 und eine Regelklappe 9 vorgesehen.

Über die Sauerstoffzuführung 6 der Treibdüse 5 wird Drucksauerstoff mit hoher Geschwindigkeit in die Treibdüse 5 geblasen. Dadurch wird nach dem Strahlpumpenprinzip Luft aus der Windleitung 1 über die Saugleitung 7 abgesaugt und ebenfalls der Treibdüse 5 zugeführt. In der Treibdüse 5 vermischt sich der Sauerstoff mit der Luft und wird in einem Anreicherungsverhältnis zwischen 25 und 50 % in den Reaktor eingetragen.

Die restliche über die Windleitung 1 zugeführte Luft wird durch die Winddüsen 2 mit Geschwindigkeiten von 12 bis 16 m/s in den Wirbelschichtreaktor eingeleitet.

Die Menge der angesaugten Luft wird mittels der Durchflussmesser 8 gemessen und über die Regelklappen 9 eingestellt. Die Eintragsgeschwindigkeiten des Sauerstoff-Luft-Gemisches werden an die gewünschte Reaktorfahrweise angepasst. Geschwindigkeiten von 40 bis 200 m/s, bevorzugt 40 bis 100 m/s, haben sich hierbei als besonders günstig erwiesen. Mittels unterschiedlicher Eintragsgeschwindigkeiten kann die Verfahrensführung an die dem Prozess entsprechenden Sauerstoffmengen angepasst werden.

Mit den bisherigen Eindüsungsverfahren sind derartige Anpassungen nur in sehr engen Bereichen möglich. So wird beispielsweise beim Hochgeschwindigkeitseintrag ein relativ geringer Impuls eingetragen, da der Sauerstoff anfangs zwar eine hohe Geschwindigkeit aufweist, aber nur eine geringe Masse besitzt. Bei dem erfindungsgemäßen Verfahren wird dagegen ein deutlich größerer Massestrom in den Reaktor eingebracht. Das Verfahren gemäß der Erfindung hat damit ein größeres Potenzial, die Verhältnisse in der Wirbelschicht zu beeinflussen.

## Patentansprüche

1. Verfahren zur Durchführung von Reaktionen in einer fluidisierten Partikelschicht, wobei Luft in die Partikelschicht eingebracht wird, **dadurch gekennzeichnet, dass** die in die Partikelschicht einzubringende Luft mittels gasförmigem Sauerstoff nach dem Strahlpumpenprinzip angesaugt, mit dem Sauerstoff gemischt und in die Partikelschicht eingebracht wird.

2. Verfahren nach Anspruch 1, **dadurch gekennzeichnet, dass** das Gemisch aus Sauerstoff und der in die Partikelschicht einzubringenden Luft in im Wesentlichen transversaler Richtung in die Partikelschicht eingebracht wird.

3. Verfahren nach einem der Ansprüche 1 oder 2, **dadurch gekennzeichnet, dass** das Mengenverhältnis von der in die Partikelschicht einzubringenden Luft zu dem Sauerstoff zwischen 0,1 und 10 beträgt.

4. Verfahren nach einem der Ansprüche 1 bis 3, **dadurch gekennzeichnet, dass** an mehreren Stellen Luft mittels Sauerstoff in die Wirbelschicht eingebracht wird.

5. Verfahren nach einem der Ansprüche 1 bis 4, **dadurch gekennzeichnet, dass** die Zuführung der Luft in die Wirbelschicht gepulst erfolgt.

## Claims

1. Method for carrying out reactions in a fluidized particle bed, air being introduced into the particle bed, **characterized in that** the air to be introduced into the particle bed is sucked in by means of gaseous oxygen on the jet-pump principle, is mixed with the oxygen and is introduced into the particle bed.

2. Method according to Claim 1, **characterized in that** the mixture of oxygen and of the air to be introduced into the particle bed is introduced into the particle bed in an essentially transverse direction.

3. Method according to either one of Claims 1 and 2, **characterized in that** the quantity ratio of the air to be introduced into the particle bed to the oxygen is between 0.1 and 10.

4. Method according to one of Claims 1 to 3, **characterized in that** air is introduced into the fluidized bed by means of oxygen at a plurality of points.

5. Method according to one of Claims 1 to 4 **characterized in that** the supply of the air into the fluidized bed takes place in a pulsed manner.

## Revendications

1. Procédé de conduite de réactions dans une couche fluidisée de particules dans lequel de l'air est apporté dans la couche de particules,
**caractérisé en ce que**
l'air à apporter dans la couche de particules est aspiré au moyen d'oxygène gazeux selon le principe de la pompe cinétique à vide, **en ce qu'**il est mélangé avec l'oxygène et **en ce qu'**il est apporté dans la couche de particules.

2. Procédé selon la revendication 1, **caractérisé en ce que** le mélange d'oxygène et d'air apporté dans la couche de particules est apporté dans la couche de particules dans une direction essentiellement transversale.

3. Procédé selon l'une des revendications 1 ou 2, **caractérisé en ce que** la proportion entre l'air apporté dans la couche de particules et l'oxygène est comprise entre 0,1 et 10.

4. Procédé selon l'une des revendications 1 à 3, **caractérisé en ce que** l'air est apporté au moyen d'oxygène en plusieurs emplacements dans la couche fluidisée.

5. Procédé selon l'une des revendications 1 à 4, **caractérisé en ce que** l'apport d'air dans la couche fluidisée s'effectue par pulsations.
